# EUROPEAN PATENT SPECIFICATION

(11) **EP 3 193 560 B1**
(45) Date of publication and mention of the grant of the patent: **18.09.2019**
(21) Application number: 16290014.6
(22) Date of filing: 18.01.2016
(51) Int. Cl.: H04W 88/06

(54) **WIRELESS COMMUNICATIONS**
DRAHTLOSE KOMMUNIKATIONEN
COMMUNICATIONS SANS FIL

(43) Date of publication of application: 19.07.2017
(73) Proprietor: NXP B.V., 5656 AG Eindhoven (NL)
(72) Inventor: BATE, Stephen Mark, Redhill, Surrey RH1 1SH (GB); GRAY, Christopher John, Redhill, Surrey RH1 1SH (GB); RIVIERE, Fabian, 14906 Caen (FR)
(74) Representative: Miles, John Richard

(56) References cited:
- EP-A1- 1 605 643
- WO-A1-2009/042469
- US-A1- 2008 043 705
- US-A1- 2010 316 027
- US-B1- 7 949 812
- US-B1- 8 489 022

## Description

The present specification relates to wireless communications and in particular to wireless communications systems and methods in which one or more resources may be shared.

Numerous wireless communications protocol standards exist and operate on many frequency bands.

When two or more protocols operate in the same, or similar, frequency band, there is the possibility that the respective wireless signals will interfere with one another in a way that causes one or both of the wireless signals to become impossible to understand by the intended recipient. Hence in some cases, it may be desirable for the protocols to be able to time-share the radio space.

For wireless communications devices that are independent of one another, there are various techniques that may be used to time-share the radio space, such as listen-before-talk (LBT) or clear-channel assessment (CCA). In LBT or CCA, a first device listens for a while before transmitting to try to minimise interfering with a second device. However this approach is of limited value, especially when the communications protocols have greatly differing characteristics. For example, a long inter-packet delay in one communications protocol may be considered to be a very short delay in another communications protocol, resulting in the LBT/CCA period being too short for reliably detecting when another packet might begin to be transmitted.

Also, in a wireless communications device that implements more than one communications protocol, it may be desirable for those protocols to share resources for reasons such as cost, power consumption or reduced device size.

Wireless communications devices that implement multiple communications protocols can take advantage of being able to negotiate between the communications protocols using a method that is independent of the radio interface. Examples of this negotiation approach include a software communication between the communications protocol stacks or a simple handshaking signal at the hardware level. Using this negotiation approach it is possible for one communications protocol to be allowed to communicate whilst the other is required to wait. The decision to choose one communications protocol over another may be arbitrary, or one communications protocol may be chosen to be more important than the other. This may be a design choice which is then fixed for the duration of operation of the device.

US 7,949,812 describes a wireless network device includes a first communication module to communicate with at least one of first devices and a second communication module to communicate with at least one of second devices. An arbitration module receives a request for communication from the first communication module, detects when the second communication module is communicating in a locked mode, and denies request for communication from the first communication module when the second communication module is communicating in the locked mode. The arbitration module receives respective signals indicating the priority level of the communication requested by the modules and uses a first look up table to determine whether to grant priority exclusively to one of the communication modules. If so then the arbitration module uses a second look up table to determine whether the other communication module is operating in the locked mode. A feedback module of the arbitrator stores statistics about the behaviour of the arbitrator and provides feedback of the statistics to a control module of the arbitrator which can use the feedback to dynamically adjust the lookup tables.

US 2008/043705 describes a system for enabling coexistence of multiple potentially interfering wireless components in a device including a wireless module using a proprietary protocol and one or more modules using standardized protocols. A coexistence arbitration module is configured to arbitrate access to a shared communication medium among the wireless modules based on assertion of medium access requests by the modules and the associated priority of the asserted medium access requests. When multiple medium access requests have the same priority, precedence for access to the shared medium is determined based on additional criteria. The coexistence arbitration module may be a separate module or may be integrated into another module or distributed among the modules. The device may include a host processor for altering transmission characteristics of a module to increase the likelihood that another module can receive data within a reasonable time period

US 8,489,022 describes arbitration between two wireless protocols in a wireless device. The wireless device includes first wireless protocol circuitry, configured to receive and process first signals according to a first wireless protocol and second wireless protocol circuitry, configured to receive and process second signals according to a second wireless protocol. The wireless device also includes coexistence circuitry configured to receive a request from the first wireless protocol circuitry to perform transmission or reception and arbitrate the requested transmission or reception between the first wireless protocol circuitry and the second wireless protocol circuitry. The decision may be based on current or future priority information, current configuration, or other factors. The coexistence circuitry, or other circuitry, may be configured to determine position of switches controlling antennas or transmission using shared or unshared antennas.

US 2010/316027 describes arbitrating concurrent usage between WLAN and Bluetooth access technologies for co-located wireless devices. A state level arbiter determines state and relevant parameters of a WLAN module and of a Bluetooth module of a wireless transceiver unit. The state level arbiter uses the state and relevant parameters to determine which of WLAN or Bluetooth or combination of WLAN and Bluetooth will provide the best concurrent performance for wireless transmissions at a given time for specific Bluetooth states and WLAN states.

Hence, wireless communication systems, devices and methods that allow communications protocols to share resources better may be beneficial.

According to a first aspect of the present disclosure, there is provided a wireless communications system according to claim 1.

Allowing each stack to determine a priority for their current messages allows a more intelligent arbitration to be realised so that more important messages from either stack may be sent or received in preference to lower priority messages.

In one or more embodiments, the arbitrator may be configured to interrupt a current use of the wireless interface by a one of the first stack and the second stack and to allow use of the wireless interface by the other of the first stack and the second stack.

In one or more embodiments, the arbitrator may be configured to allow a current use of the wireless interface by a one of the first stack and the second stack to complete before allowing use of the wireless interface by the other of the first stack and the second stack.

In one or more embodiments, the arbitrator may be configured to implement a handshaking protocol between the first stack and the arbitrator and the second stack and the arbitrator.

In one or more embodiments: the first stack may be configured to send a wireless access request and the first priority to the arbitrator to request wireless use; the second stack may be configured to send a wireless access request and the second priority to the arbitrator to request wireless use; and the arbitrator may be configured to determine which of the first stack and the second stack to allow to use the wireless interface based on the order of receipt of the wireless access requests, the first priority and the second priority and to send a wireless access grant to a one of the first stack and the second stack which most recently sent a wireless access request and having the higher priority.

In one or more embodiments, the arbitrator may be further configured to enable or disable use of at least one part of the wireless interface. The wireless interface may include a first radio and a second radio and the arbitrator may be configured to selectively enable use of the first radio by the first stack and disable use of the second radio by the second stack or enable use of the second radio by the second stack and disable use of the first radio by the first stack.

In one or more embodiments, the wireless communications system may further comprise a signal routing device arranged to route first signals of the first stack and second signals of the second stack. The wireless interface may include at least one common part which is commonly useable by the first stack and the second stack. The signal routing device may be connected to the at least one common part to route either the first signals to or from the common part or the second signals to or from the common part.

In one or more embodiments, the arbitrator may be in communication with the signal routing device and the arbitrator may be configured to control the signal routing device to selectively route either the first signals or the second signals.

In one or more embodiments, the signal routing device may be a multiplexer, a demultiplexer, a multiplexer/demultiplexer or a switching device.

In one or more embodiments, the at least one common part may comprise an antenna or a radio and an antenna.

In one or more embodiments, a part of the first stack and a part of the second stack may be a part common to the first stack and the second stack. The part common to the first stack and the second stack may be implemented in software. The part common to the first stack and the second stack may be a hardware device.

In one or more embodiments, the wireless communications system may further include a third stack of a third wireless communications protocol, and wherein the wireless interface is useable by the third stack, the third stack is configured to determine a third priority associated with a current message to be transmitted or received by the third stack using the wireless interface, and the arbitrator is configured to control which one of the first stack, the second stack and the third stack can use the wireless interface to transmit or receive the current message based on which of the first priority, the second priority and the third priority is the highest.

In one or more embodiments, the first wireless communications protocol and the second wireless communications protocol may be different wireless communications protocols.

In one or more embodiments, the first wireless communications protocol and the second wireless communications protocol may be the same wireless communications protocol. The first stack may be a first implementation of the wireless communications protocol and the second stack may be a second implementation of the wireless communications protocol. The first implementation and the second implementation may be different implementations.

The wireless communications protocols may be one or more of any of the following wireless communications protocols: ZigBee, Z-Wave, Bluetooth, Bluetooth Low Energy, Thread, Wi-Fi (any IEEE 802.11 standard), ISA100.11a, WirelessHART, MiWi, or 6LoWPAN.

According to a second aspect of the present disclosure, there is provided a package or a plurality of packages according to claim 11.

According to a third aspect of the present disclosure there is provided an electronic device according to claim 12.

According to a fourth aspect of the present disclosure, there is provided a method for controlling use of a wireless interface of a wireless communications system according to claim 13.

An example embodiment of the invention will now be described in detail, by way of example only, and with reference to the accompanying drawings, in which:
Figure 1 shows a schematic block diagram of an example wireless communications device including a first example wireless communications system;
Figure 2 shows a schematic block diagram of an example wireless communications device including a second example wireless communications system;
Figure 3 shows a schematic block diagram of an example wireless communications device including a third example wireless communications system;
Figure 4 shows a schematic block diagram of an example wireless communications device including a fourth example wireless communications system;
Figure 5 shows a schematic block diagram of an example wireless communications device including a fifth example wireless communications system;
Figure 6 shows a schematic block diagram of an example wireless communications device including a sixth example wireless communications system;
Figure 7 shows a schematic block diagram of an example wireless communications device including a seventh example wireless communications system;
Figure 8 shows a process flow chart illustrating operation of wireless communications system;
Figures 9 and 10 show a process flow chart illustrating operation of the communications stacks of the wireless communications systems in in greater detail;
Figure 11 shows a graphical representation of a state machine implemented by the arbitrator of the wireless communication system; and
Figure 12 shows a timing diagram illustrating operation of the arbitrator to control use of the radio interface by the communications stacks.

Similar items in the different Figures share like reference signs unless indicated otherwise.

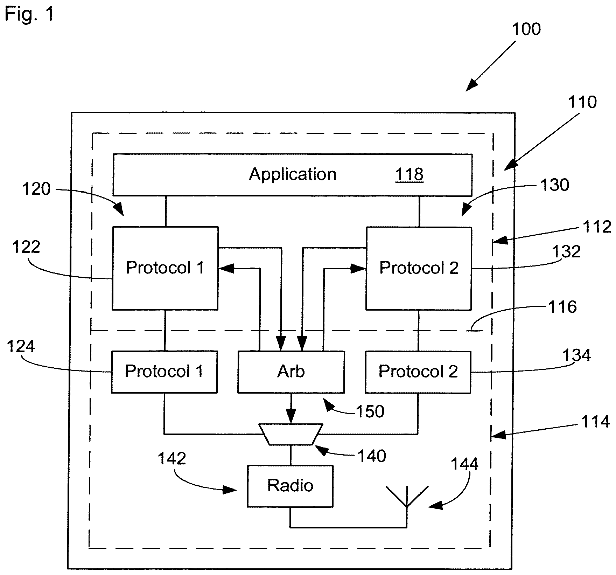

With reference to Figure 1, there is shown a schematic block diagram of an electronic device, apparatus or appliance 100 including a wireless communications system 110. The electronic device 100 may be of any type which utilises wireless communications, such as building automation devices, including a wireless-enabled light, a thermostat, an occupancy detector, a window or door switch, an electronic door lock, a security alarm, a remote control, a smart meter, or devices that implement communication between wireless networks and/or between wireless and wired networks, such as a gateway device or bridge device.

Although not shown in Figure 1, for the sake of clarity, the electronic device 100 may include various other circuits, systems and sub-systems as are typically provided in such devices and the exact nature and details of which will vary from device to device and depending on the primary application of the device. However, generally electronic device 100 may include at least some form of power supply, one or more data processing devices, and any associated memory that may be used to store any software required by the device, and some form of input/output to permit user interaction. The data processing devices may be general purpose and suitably configured by software stored on the device or the data processing devices may be application specific.

As illustrated in Figure 1, the wireless communications system 110 includes portions implemented by software 112 and portions implemented by hardware 114, as distinguished by dashed line 116. The wireless communications system includes or has access to a software application or part of an application 118 at the application layer level which provides the general overall functionality of the electronic device 100. The wireless communication system 110 also includes a first stack 120 of a first wireless communications protocol. The first stack 120 includes multiple layers implemented in software 122 and hardware 124. The hardware layer or layers 124 includes at least the physical or PHY layer. Similarly the second stack 130 includes multiple layers implemented in software 132 and hardware 134. The hardware layer or layers 134 includes at least the physical or PHY layer. The first stack 120 and the second stack 130 are each connected to a respective input of a signal routing device 140, which may be in the form of a switching device or a multiplexer/demultiplexer (generally referred to herein as a multiplexer), whose output is connected to a radio 142 having wireless transmitter and receiver functionalities. The radio 142 is connected to an antenna 144 which can be used to transmit and receive wireless signals. The radio 142 and antenna 144 provide a wireless interface between the electronic device and the wireless signals which may be transmitted and received via the wireless interface.

The wireless communications system 110 also includes an arbitrator 150 which is in communication with the first stack 120 and the second stack 130 and which is operable to generate and output a control signal to an input of the multiplexer 140 to select which of the first stack 120 and the second stack 130 can use the wireless interface, provided by the radio 142 and antenna 144, for wireless communication. As explained in greater detail below, each stack 120, 130, can determine and assign a priority level to a message or part of a message that the stack currently wants to send or receive using the wireless interface. A signal indicative of the current priority level is sent by each stack to the arbitrator 150 which can then output a signal to multiplexer 140 to permit the stack with the highest current priority level to use the radio and antenna to transmit or receive the message or part of the message. The determination of current priority levels by the stacks 120, 130 is dynamic and ongoing so at any point in time, the current priority level for either stack may increase or decrease and the arbitrator 150 will operate to activate the multiplexer 140 to switch to the stack with the currently higher priority so that it can use the radio interface of the system, provided by radio 142 and antenna 144. The arbitrator may assign the radio interface to the stack with the current highest priority for the duration of the transaction for that stack. Additionally, or alternatively, the arbitrator mat change the assignment before the end of the transaction if a higher or a sufficiently higher priority transaction becomes apparent for the other stack.

In many communications protocols some traffic or messages has more significance than other traffic or messages, so this more intelligent arbitration scheme dynamically alters the priority for each communications protocol. The priority may be based on the traffic or message type and also the particular data or packet of the message. Arbitrating in this manner helps to ensure that important messages used by either protocol will get priority over less important messages of either protocol.

For example, an alarm signal of the first protocol could be expected to be of greater priority than a regular ping indication of the second protocol. In turn, that ping indication may become more significant if several consecutive pings have failed to be acknowledged, suggesting that there may be a more fundamental communication problem for the second protocol. In such a case, a subsequent ping attempt is of more significance as its failure may trigger a recovery mechanism in the second protocol, causing disruption in the overall operation of the electronic device, and so may be assigned a higher priority by the second stack than the priority of the alarm signal for the first stack.

The wireless communications system 110 allows the multiple communications protocols to share a commonly required wireless communications resource: either a hardware wireless resource, such as a radio and/or antenna; or a spectrum wireless resource, such as the same, overlapping, or close parts of the wireless spectrum. Allowing multiple communications protocols to share the same radio space without any arbitration would risk the loss of data due to interference (if common hardware were used, for example radio intermodulation issues or excessive transmitter noise in the receiver's band) or collision (concurrent or overlapping transmissions or receptions in the same or similar parts of the frequency spectrum). Implementing a simpler priority scheme such as "first device wins" or "protocol A always has priority over protocol B", risks the loss of important messages whilst allowing the transmission of less important messages.

As discussed above, the wireless communications system overcomes these problems by using a dynamic priority mechanism. Rather than having a fixed priority for each protocol, each protocol provides a priority level for each attempt at using the shared communications resource, which changes depending on the significance of the message to be transmitted or received at that time.

In some embodiments, the first stack 120 and the second stack 130 may implement different wireless communications protocols. Wireless communications protocols that share the same operating band include IEEE802.15.4 based protocols, Wi-Fi and Bluetooth protocol operating in the 2.4GHz ISM band, for example. Wireless communications protocols that operate in adjacent frequency bands include UTMS 2.1GHz, LTE 2.6GHz and Bluetooth, for example.

In some embodiments, the first stack and the second stack may be separate implementations of the same wireless communications protocols. An electronic device including multiple implementations of the same protocol may be a bridging device for connecting separate networks that use the same communications protocol but use different characteristics (such as frequency, network identifier, etc.), such as a building security network and a building automation network. Another example electronic device example is one containing a ZigBee stack and a Thread stack (Thread being a simplified IPv6 based mesh networking protocol) where each stack uses an independent implementation of the underlying IEEE 802.15.4 protocol.

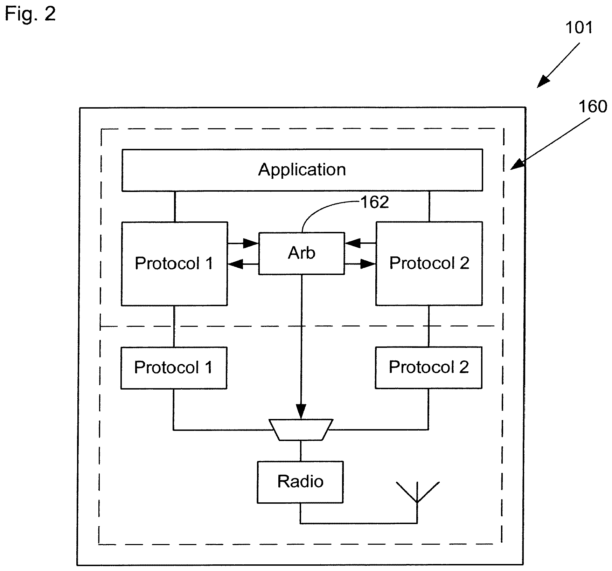

Figure 2 shows a schematic block diagram of a second electronic device 101 including a second wireless communications system 160. The second wireless communications system 160 is generally similar to the first 110 shown in Figure 1, other than the arbitrator 162 is implemented in software in the second wireless communications system. In other variations, the arbitrator may be implemented as a combination of a hardware device or circuitry and software.

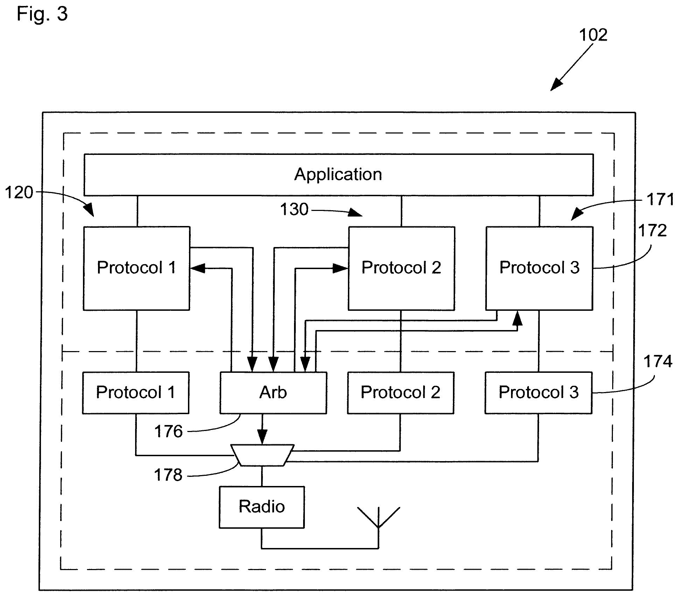

Figure 3 shows a schematic block diagram of a third electronic device 102 including a third wireless communications system 170. The third wireless communications system 170 is generally similar to the first 110 shown in Figure 1, other than including a third stack 171 of a third wireless communications protocol. The third stack 171 includes software layers 172 and at least one hardware layer 174 which is connected to a third input of the multiplexer 178. The arbitrator 176 is in communication with the third stack 171 and is operable to control the multiplexer to connect any one of the three stacks to the common radio interface to allow any one of the three communications protocols to use the radio interface. The wireless communications protocols implemented by the stacks may all be different, or some of them may be the same. It will be appreciated that in other variations, a greater number of stacks and wireless communications protocols may also be provided.

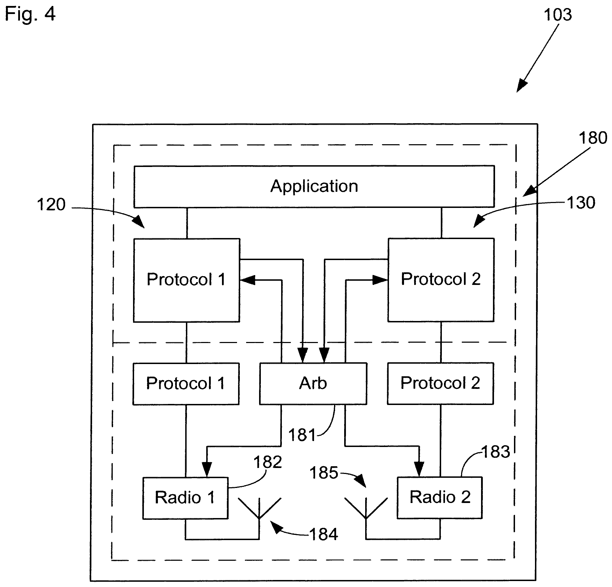

Figure 4 shows a schematic block diagram of a fourth electronic device 103 including a fourth wireless communications system 180. The fourth wireless communications system 180 is generally similar to the first 110 shown in Figure 1, other than including a first radio 182 and a second radio 183 and a first antenna 184 and a second antenna 185 which provide the radio interface. The arbitrator 181 is connected to each of the first and second radios 181, 183 to selectively inhibit or permit their operation. Hence, the wireless communications system 180 permits either the first stack 120 to use the first radio 182 and first antenna 184 to send or receive transmissions, or the second stack 130 to use the second radio 183 and second antenna 185 to send or receive transmissions, depending on the current priority assigned by the respective stacks to their current messages or parts of messages. The system illustrated in Figure 4 may be particularly suited to applications in which the first wireless communications protocol and second wireless communications protocol are different and use wireless signals having different frequencies and therefore cannot use a single radio or antenna.

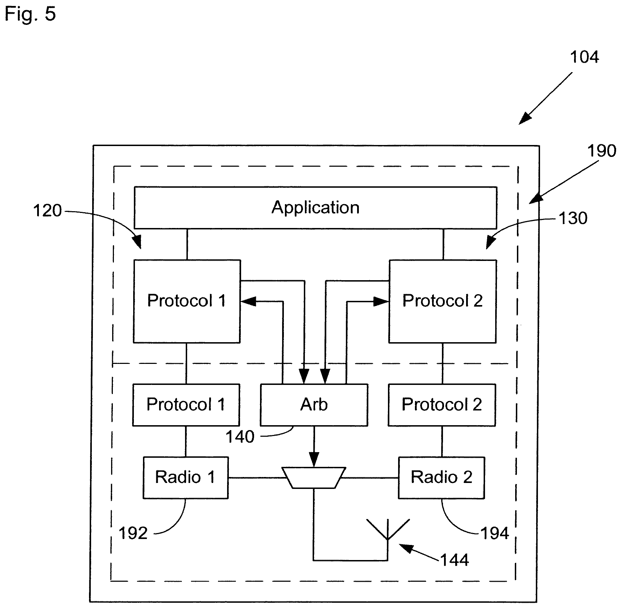

Figure 5 shows a schematic block diagram of a fifth electronic device 104 including a fifth wireless communications system 190. The fifth wireless communications system 190 is generally similar to the first 110 shown in Figure 1, other than including a first radio 192 and a second radio 194 connected to the first and second inputs of the multiplexer 140, and the antenna 144 being connected to the output of the multiplexer. Hence, the wireless communications system 190 permits either the first stack 120 or the second stack to use the common antenna of the radio interface, depending on the current priority assigned by the respective stacks to their current messages or parts of messages. The system illustrated in Figure 5 may be particularly suited to applications in which the first wireless communications protocol and second wireless communications protocol are different and use wireless signals having different frequencies and therefore cannot use a single radio but can use a common antenna.

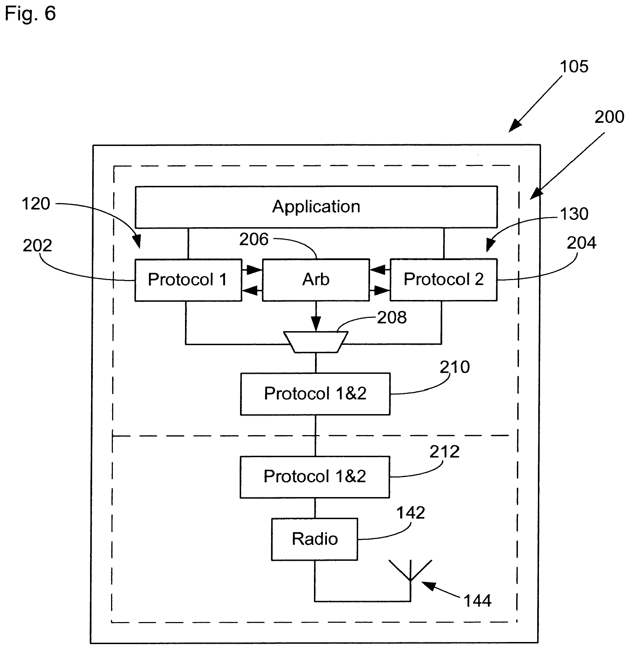

Figure 6 shows a schematic block diagram of a sixth electronic device 105 including a sixth wireless communications system 200. The sixth wireless communications system 200 is generally similar to the first 110 shown in Figure 1. However, in the sixth wireless communications system, one or more lower layers of the communications protocol are common to the first stack 120 and second stack 130. At least one or more upper layers 202 of the first communications protocol stack 120 and at least one or more upper layers 204 of the second communications protocol stack 130 are separately implemented in software and configured to dynamically determine a current priority for a current communications transaction, message or part of a message. An arbitrator 206 also implemented in software is in communication with the upper layers 202, 204 of each stack to receive data indicating a current priority for communications being handled by the respective stacks 120, 130. The arbitrator 208 controls a software switch or multiplexer 208 to selectively route or pass data and/or commands to one or more lower layers 210 of the communications protocol stack and which are common to the first communications protocol and the second communications protocol. The communications protocol stack also includes any layers common to both communications protocols and which are implemented in hardware, including, at least, the physical or PHY layer 212. The physical layer device or PHY 212 is connected to the radio 142 which is connected to the antenna 144.

Hence, any layers of a communications protocol stack which may be commonly used by the same communications protocol or different communications protocols can be shared and the arbitrator 206 can selectively allow the first stack 120 or second stack 130 to use the wireless interface depending on the current priorities of the messages to be sent or received by the first and second stacks. In this approach, the first communications protocol stack 120 can be considered to include layers 202, 210 and 212, and the second communications protocol stack 130 can be considered to include layers 204, 210 and 212. For example, an electronic device containing a ZigBee stack and a Thread stack could share a single IEEE 802.15.4 implementation of either the PHY or the MAC layer.

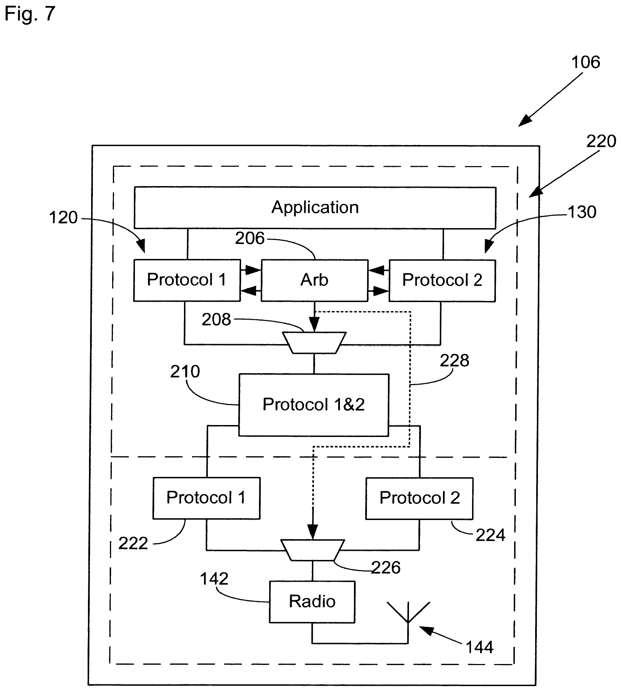

Figure 7 shows a schematic block diagram of a seventh electronic device 106 including a seventh wireless communications system 220. The seventh wireless communications system 220 is generally similar to the sixth 200 shown in Figure 6. However, in the seventh wireless communications system, one or more lowest layers of the communications protocol are separate between the first stack 120 and second stack 130. Similarly to the sixth wireless communications system, one or more of the software layers 210 of the stack are common to the first stack 120 and the second stack 130. However, one or more lowest layers of the stacks 120, 130 are separate. For example a first device or PHY layer 222 of the first communications protocol and a second device or PHY layer 224 of the second communications protocol are provided as separate hardware devices each in communication with a multiplexer 226 which also receives a control signal 228 from the arbitrator 206. It will be appreciated that in some versions the arbitrator 206 may be implemented by hardware also. The antenna 144 is connected to the radio 142 which is connected to the output of the multiplexer 226. Hence, depending on which stack has currently assigned the highest priority to its message, the arbitrator operates to allow either the first stack or the second stack to use the radio interface to transmit or receive.

It will be appreciated that the wireless communications systems illustrated in Figures 1 to 7 above are merely examples and that the various features of these systems may be used with the features of the other systems in any and all possible combinations.

Returning to Figure 1, a more detailed explanation of how the first and second stacks may determine a current message priority and how the arbitrator may interact with the stacks will now be provided. The following description is within the context of the first and second stacks being for different wireless communications protocols. However, the system is not limited to that. How to modify the below teaching for the situation of the first and second stacks being for the same wireless communications protocol will be apparent to a person of ordinary skill in the art from the explanation and discussion herein.

In this illustrative example, the first wireless communications protocol, P1, is the ZigBee protocol and the second wireless communications protocol, P2, is the Bluetooth Low Energy protocol, sometimes referred to as BLE. Hence the first stack 120 is a ZigBee stack, including a ZigBee 802.15.4 MAC layer as part of the software layers 122 of the stack. The MAC (media access control) layer can be considered one of two sub-layers of the Data Link Control layer of the OSI model of communication. The second stack 130 is a Bluetooth Low Energy stack, including a BLE link layer as part of the software layers 132 of the stack. The ZigBee stack 120 and BLE stack 130 are modified compared to standard implementations in order to provide the dynamic priority assignment to the current messages or parts of message that the stack is expecting to transmit or receive.

The ZigBee stack 120 provides an indication of the priority level for each message that it sends, and for the priority of the receive operation. The determination of a suitable dynamic priority level is based on (i) the relevant system state and (ii) the message type of the transmitted message or of the message that is expected to be received. The relevant part of the system state may vary depending on the message type. Messages can originate at all levels of the stack 120 so some modification may be provided at every point in the stack where a message is created. Alternatively, depending on implementation, the modifications may be made at just the ZigBee network layer by determining the message type prior to encrypting it and passing it to the MAC layer. The modification allows an analysis of the current system state and the current message type to derive a priority level that is then passed to the arbitrator.

The modifications to the BLE stack 130 are similar in principle to the modifications to the ZigBee stack 120. Again, the BLE stack 130 provides an indication of the priority level for each message that it sends, and for the priority of the receive operation. In BLE most transmit and receive operations occur in pairs and the same priority is appropriate to each of the transmit and receive operations. The determination of a suitable dynamic priority level is based on (i) the current relevant system state and (ii) the current message type of the transmitted message or of the message that is expected to be received. The relevant part of the system state may vary depending on the message type.

Again, messages originate at all levels of the BLE stack so modification may be made at every point in the stack where a message is created. The modifications permit an analysis of the current system state and the current message type to derive a priority level that is then passed to the arbitrator module.

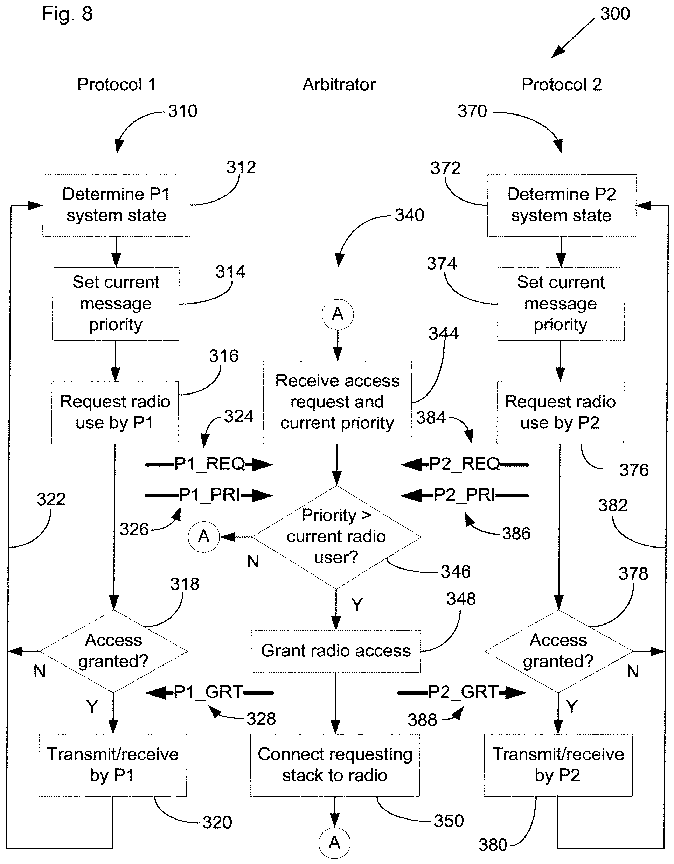

With reference to Figure 8, there is shown a process flow chart illustrating, at a higher level, a method of operation 300 of the wireless communication system 110 of Figure 1. The process flow chart illustrates operations 310 carried out by the first communications protocol stack 120, operations 340 carried out by the arbitrator 150 and operations 370 carried out by the second communications protocol stack 130. As illustrated in Figure 8, the operations of the first protocol stack 120, arbitrator 150 and second protocol stack 130 are generally carried out in a parallel manner with signals passing between the first protocol stack 120 and arbitrator 150 and between the second protocol stack 130 and arbitrator 150.

Starting initially with operation of the first protocol stack 120, at 312, the first protocol stack 120 determines its current system state. Then at 314, a current message, or part of message, priority is set based on the current system state and also the type of the current message or part of the message. As used herein below, the message or part of the message will be described in terms of a packet, for a packet based communications protocol. However, it will be appreciated that the method can also be applied to non-packet based communications protocols. Further, the term "message" is not intended to be specifically limiting, but rather to include any type of minimal data or command that may be sent or received by the communications protocol. Hence, the message, or part of a message may be a single command, control element or data element. Hence, a message does not necessarily need to include any payload, it may be simply the minimal or smallest entity used by the communications protocol. Once a priority has been assigned to the current message at 314, then at 316, the first communications protocol sends a request to the arbitrator 150 to use the radio interface of the system 110. The first communications protocol sends a request to use the radio interface "P1_REQ" together with a data item indicating the current priority level for the current message of the first stack, "P1_PRI" 324, 326, as illustrated in Figure 8.

At 344, the arbitrator 150 receives the radio access request P1_REQ, and the current priority level for the first protocol stack, P1_PRI, from the first communications stack 120. At 346, the arbitrator determines whether the received priority is greater than the priority level for any communications stack currently using the radio interface. If no communications stack is currently using the radio interface, then the received priority will be greater than the existing priority which could be considered to be zero. Alternatively, if the priority received from the first communication stack, P1_PRI, is not greater than the priority associated with a message of the second communications protocol stack 130 which is already using the radio interface, then the second communications stack 130 is permitted to continue use of the radio interface and the first communications stack 120 is denied access to the radio interface. Hence, processing returns to step 344. Alternatively, if the priority of the first stack is greater than that of any current user of the radio interface, then the arbitrator 150 grants the first communications protocol access to the radio stack at 348 and notifies the first communications stack that it has been granted radio access as illustrated by arrow 328, "P1_GRT".

At 318, the first stack 120 determines whether it has been granted access to the radio interface by the arbitrator 150. If not, then process flow returns to step 312 and processing continues, as described above, which may include setting a new priority level for the message currently to be sent by the communications stack. Alternatively, if access has been granted, then processing proceeds to step 320 and the first communications stack 120 can use the radio interface to transmit or receive the current message or part of the message. Processing then returns, as illustrated by process flow line 322 back to step 312 and any next message or message part is processed similarly.

The second protocol stack 130 operates in essentially the same way as the first protocol stack. Hence, at 372, the second protocol stack 130 determines its current system state and then at 374 a priority is set for the current message or part of the message, based on the current system state and type of the message or part of the message to be sent or received. At 376 the second communications step 130 sends a request P2_REQ 384 to the arbitrator 150 together with the current priority level for the message or part of the message to be sent or received by the second communications stack P2_PRI 386.

If the arbitrator 150 determines that P2 PRI is greater than the priority of any other communications stack currently using the radio interface, then radio access is granted by the arbitrator 150 and a radio access grant signal P2_GRT 388 is sent to the second communications stack 130. On determining at 378 that radio access has been granted, processing proceeds to step 380 and the second communications protocol stack uses the radio interface to transmit or receive the current message or part of the message and processing returns, as illustrated by process flow line 382 back to step 372 for which a next message or part of the message is processed similarly.

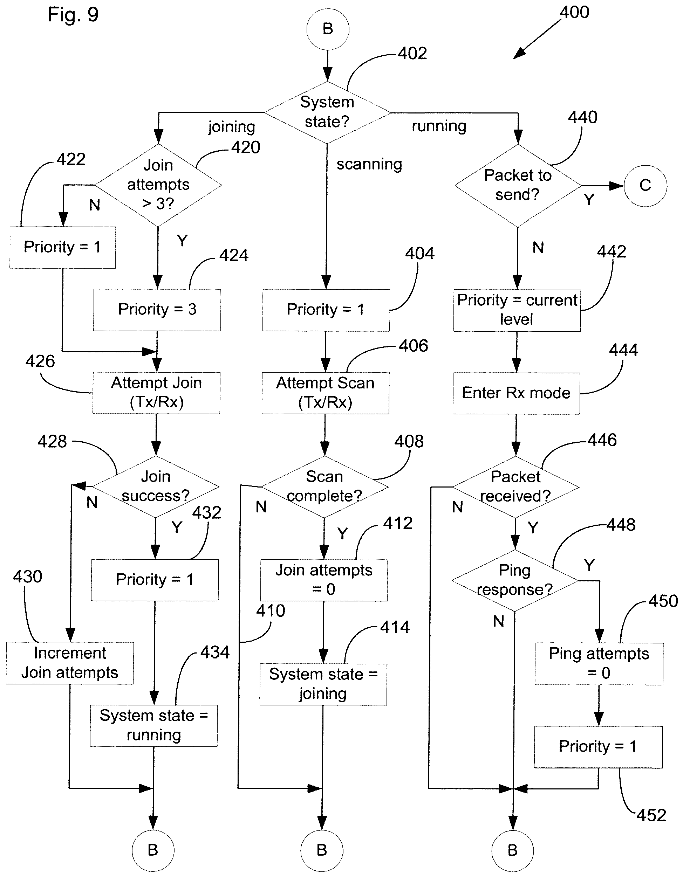

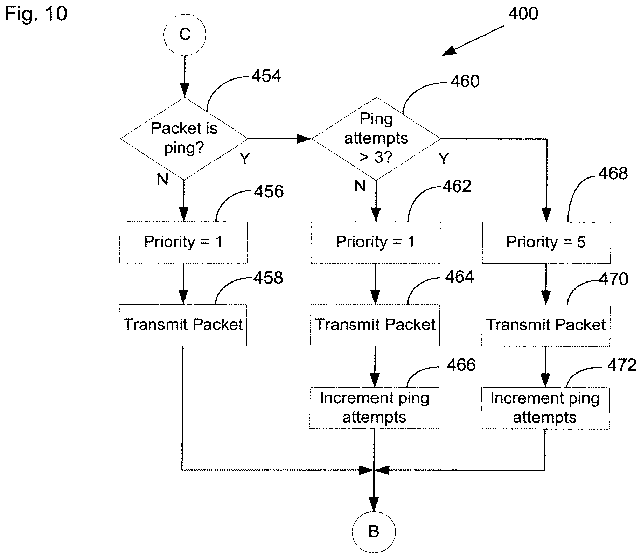

The operation of the protocol stacks in setting the current message, part of message or packet priority, will now be described in greater detail with reference to Figures 9 and 10. It will be appreciated that there are numerous ways in which the priority level of a message or part of a message can be set based on the current status of the stack and the type of the message. The example illustrated in Figures 9 and 10 is therefore merely one of several possible implementations. Figure 9 shows a method of operation of the first protocol stack, being an implementation of the ZigBee protocol, including suitable modifications at the ZigBee network layer and illustrating the provision of dynamic priorities for packets used during joining and pin operations after several unsuccessful attempts. The system state, packet type and internal failure counters are used to determine the priority level to assign to any particular message part. The priorities are assigned at a level of packet send / packet response pairing which is appropriate for the ZigBee protocol. If the method of operation of the BLE stack 130 is generally similar and may be implemented in the BLE link layer as will be apparent to a person of ordinary skill in the art from the discussion herein.

The method of operation 400 of the ZigBee stack 120 is illustrated by the process flow chart spanning Figures 9 and 10 and linked by connector "C". In particular, the operations 400 illustrated in Figures 9 and 10 may be carried out by the ZigBee network layer implemented by a software part 122 of the ZigBee stack 120. At 402 the current state of the system is determined. Assuming that there is not yet any connection with a ZigBee network, then at 402, the system state is determined to be scanning in which the ZigBee stack 120 is trying to identify any ZigBee networks it may join. Processing proceeds to step 404 at which a priority level of 1 is assigned to the transmit/receive packet pair used as part of the scanning operation in the ZigBee protocol. At 406,the ZigBee protocol 120 attempts to scan for a ZigBee network by sending a radio access request and current message priority data item to the arbitrator, as described above. At 408, it is determined whether the scan was successfully completed, which may not be the case is the transmitted package is not sent and the expected packet is not received. If the scanning is not completed at 408, then processing returns to step 402 and the scanning process may repeat. Alternatively, if the scan is successfully completed at 408, then a join attempts counter is set to zero at 412, and at 414, the system state is updated to "joining" indicating that the ZigBee stack is now attempting to join a ZigBee network. Processing then returns to step 402. Hence, in this case, the priority level for scanning is always set at 1 as the system state remains in a scanning state until a successful scan has been completed. Also, the priority level assigned at 404 is dependent on the packet types as process flow from 402 to 414 is limited to package use during the scanning operation of the ZigBee stack 120.

Returning to 402, following a successful scan operation, the system state is set to joining at 414, and hence at 402, processing proceeds to 420. At 420, as join attempts was set to zero at 412, then processing proceeds to step 422 for which a priority level of 1 is set to the packets associated with the joining operation. Processing proceeds to 426 at which the ZigBee stack attempts to join a ZigBee network and requests access to the radio interface via arbitrator 150. If at 428 it is determined that the ZigBee stack has failed to join the ZigBee network, for example, because either the transmitted packet was not sent or the expected received packet was not received, then processing proceeds to step 430 at which the join attempts counter is incremented by 1. Following that, processing proceeds to step 402 and a further join attempt is made. After 3 unsuccessful join attempts, then at 420, the join attempts counter will exceed 3 and so processing proceeds to 424 at which the priority level for the packets associated with the join attempt is set at 3. Hence, at 426 the chances of the ZigBee protocol being allowed to access the radio interface are increased as the priority of the packets is higher and so the BLE protocol may be denied access to the radio interface, in preference to the ZigBee protocol, by arbitrator 150.

If it is determined at 428 that the ZigBee protocol has successfully joined the ZigBee network, then processing proceeds to 432 and the current message priority level for the ZigBee stack is set to 1 at 432. At 434, the system state for the ZigBee stack is set to running and processing returns to 402.

At 402, the current system state is determined to be running, consequent to step 434, and at 440, the ZigBee stack determines whether the current packet is to be sent. If not, and the next action is to receive a packet, then processing proceeds to 442 and the priority for packet receipt is set to the current priority level for the ZigBee stack, which is previously set to 1 at 432. At 444, the ZigBee stack enters a reception mode and requests access to the radio interface, using a priority level of 1, so that it may receive the expected packet. At 446 it is determined whether the packet has been received and if not, then processing returns to 402. If at 446 it is determined that a packet has been received, then at 448 it is determined whether the received packet is a pinged response. If the received packet is not a pinged response then processing returns to 402. Alternatively, if the received packet is a pinged response, then at 450 a ping attempts counter is set to zero and a current priority level for the ZigBee stack is set to 1 at 452. Processing then returns to 402.

With reference to Figure 10, if at 440 it is determined that the ZigBee stack currently next needs to send a packet, then processing proceeds to 454 at which it is determined whether the packet is a ping or not. If not, then at 456, the priority level for the packet to be sent is set to 1 and at 458, the ZigBee protocol contacts the arbitrator 150 to try to gain radio access. If radio access is permitted then at 458, the packet can be transmitted. Processing then returns to 402.

If at 454, it is determined that the packet to be sent is a ping then processing proceeds to 460 at which it is determined whether the ping attempts counter is greater than 3. If not then at 462, the priority level is set to 1 and the ZigBee stack requests access to the radio interface via arbitrator 150. If access is permitted then at 464, the ping packet is transmitted and at 466 a ping attempts counter is incremented by 1. Processing then returns to 402.

On the other hand, if at 460 it is determined that the ping attempts counter is greater than 3 then processing proceeds to 468 at which the priority level for the ping packet is set to 5. The ZigBee stack then requests access to the radio interface via arbitrator 150 and is more likely to be granted access to the radio interface given the high priority of the current message to be transmitted. If radio access is granted by the arbitrator then at 470, the ping packet is transmitted and at 472 a ping attempts counter is incremented. The ping attempts counter may also be used by other logic (not shown) to cause the stack to give up on the connection after, for example, 5 attempts. The stack system status would then revert back to the "scanning" system state to try to find a better device or network to try and join to. Processing then returns to 402.

Hence, as will be appreciated, depending on the current state of the system and the nature of the packet to be sent, the priority level of the packet to be sent or received is set by the first protocol stack to increase the chance of the first protocol stack being granted access to the radio interface by the arbitrator 150.

As described above, and illustrated in Figure 8, the arbitrator 150 receives radio interface access requests from the communications protocol stacks together with a current priority level associated with the message that the stack is currently trying to send or receive. The arbitrator determines which of the communications stacks to allow access to the radio interface based on the timing of the access requests and the message priority levels associated therewith.

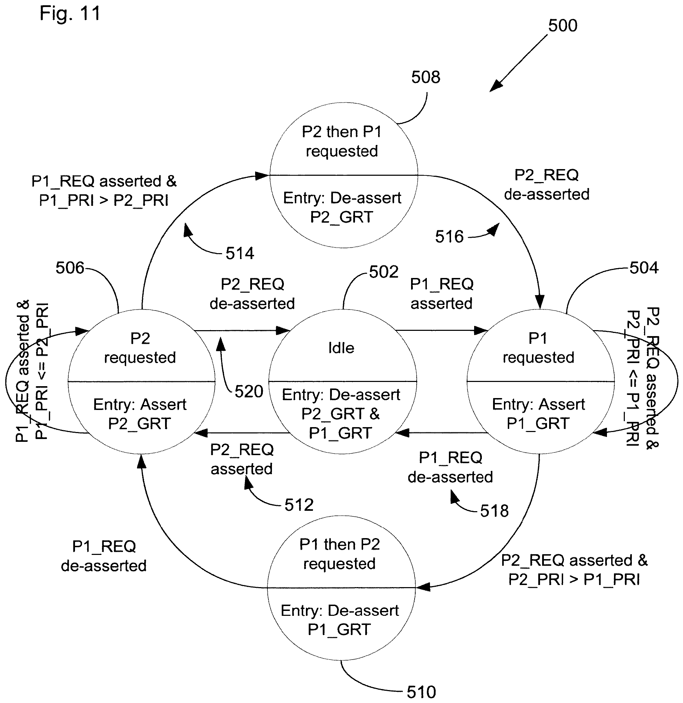

Figure 11 shows a graphical representation 500 of a state machine that is implemented by the arbitrator 150. The state machine 500 of the arbitrator 150 is represented in Figure 11 by a directed graph, also called a state diagram, in which each of the states of the arbitrator is represented by a node (circle). Edges (arrows) show the transitions from one state to another. Arrows between nodes are labelled with the input that triggers the transition between states. Inputs that do not cause a change of state are represented by arrows returning to the original state. Node 502 represents an idle state of the arbitrator, node 504 represents the state in which the first protocol stack P1 has requested radio access, node 506 represents the state in which the second protocol stack P2 has requested radio access, node 508 represents the state in which the first protocol stack has requested radio access after the second protocol stack and node 510 represents the state in which the second protocol stack has requested access after the first protocol stack. The conditions giving rise to transitions between the states are in terms of the access request, priority level and access grant signals described above with reference to Figure 8.

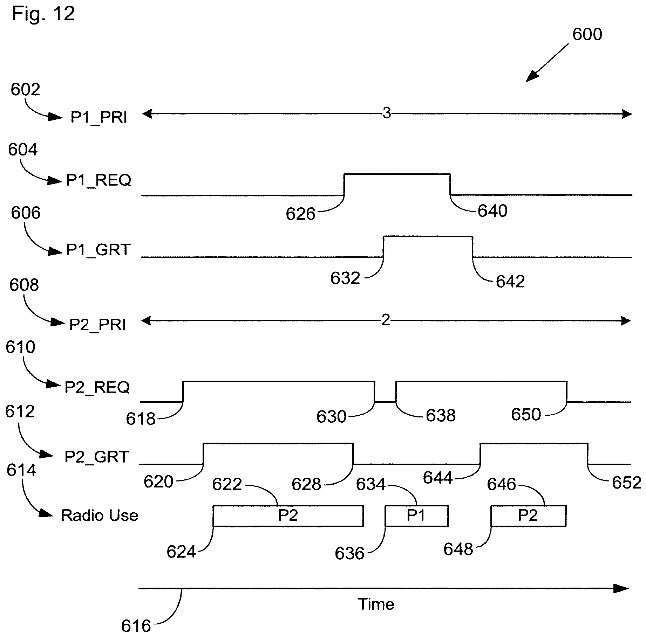

Figure 12 shows a timing diagram 600 which will be used to illustrate operation of the arbitrator 150 and which of the first protocol stack, P1, and the second protocol stack P2, is allowed radio access by the arbitrator as a function of time. P1_PRI 602 is the priority level of the current message of the first protocol stack which is constant and at a value of 3 in this example. P1_REQ 604 represents the first protocol stack radio access request signal which is low when not asserted and high when asserted. P1_GRT 606 represents the first protocol stack access grant signal issued by the arbitrator which is low when not asserted and high when asserted. P2_PRI 608 represents the current priority level for the second protocol stack, which in this example is constant and at a value of 2. P2 REQ 610 represents the second protocol stack request signal which is low when not asserted and high when asserted. P2_GRT 612 represents the radio access grant signal issued by the arbitrator to the second protocol stack and which is low when not asserted and high when asserted. Part 614 indicates which of the first second protocol stacks can access and use the radio interface as a function of a time axis 616.

Both interrupting and non-interrupting implementations of the arbitrator 150 may be used, depending on the communications protocols involved and level of control desired. In an interrupting protocol, then whenever any access request is received from a stack with a higher priority, then the currently using stack is immediately denied radio access. In a non-interrupting implementation, then the currently using protocol stack is permitted to complete its communication transaction before the requesting stack is permitted access to the radio interface. A non-interrupting implementation is described below, using a hand shaking mechanism to ensure that the interrupted stack can notify that it has finished with the radio interface before the interrupting stack is granted access.

As described above, each stack provides the arbitrator 150 with a request and a priority level and each stack receives a grant signal from the arbitrator when access to the radio has been allowed. The priority signal is used to indicate the priority level dynamically associated with a stack and the request signal is asserted by the stack to indicate to the arbitration engine 150 that the stack would like access to the radio interface. The request signal is deasserted by the stack to indicate to the arbitration engine that the stack no longer requires access to the radio interface. The arbitrator asserts the grant signal to indicate that the stack has been given access to the radio interface and deasserts the grant signal to indicate that the arbitrator would like to remove the right to access.

Initially it is assumed that the arbitrator 150 is in the idle state 502 and neither the ZigBee stack 120, P1, nor the BLE stack 130, P2, is using or has access to the radio interface.

At 618 the BLE/P2 stack asserts P2_REQ for access to the radio interface and the arbitrator changes state traversing 512 to state 506. As there are no other requests in progress, the arbitrator asserts P2 GRT at 620 and this enables the BLE Link Layer to start using the radio interface for transmission/reception 622 at 624. At 626 the ZigBee/P1 stack asserts P1_REQ to request access to the radio interface and, as this has a higher priority, P1_PRI = 3, than the BLE/P2 stack, P2_PRI = 2, the arbitrator de-asserts the P2_GRT signal 612 at 628, and the arbitrator changes state from 506 to 508 traversing along 514. In response to this, the P2 Link Layer stops using the radio interface and then de-asserts the P2_REQ signal 610 at 630 to indicate to the arbitrator that the radio interface is now available, and the arbitrator changes state from 508 to 510 traversing along 516. The arbitrator now asserts P1_GRT at 632 and this enables the ZigBee MAC part of the first stack 120, P1, to start using 634 the radio interface at 636. During this time the BLE/P2 stack asserts the P2_REQ signal 610 again at 638, but this is not acted upon because the higher-priority ZigBee/P1 stack now has access rights to the radio interface and hence the arbitrator remains in state 504.

When the ZigBee MAC part of the P1 stack has finished with the radio interface, it de-asserts the P1_REQ signal 604 at 640 to indicate this to the arbitrator and the arbitrator changes state to state 502 traversing along 518. The arbitrator then de-asserts the P1_GRT signal 606 at 642 and then asserts the P2_GRT signal 612 at 644, and changes state to state 506 by traversing along 512 again. This enables the BLE Link Layer to start using the radio interface again 646 at 648. When the BLE Link Layer of second stack, P2, has finished using the radio interface, then it de-asserts the P2 REQ signal 610 at 650 to indicate this to the arbitrator, and the arbitrator changes from state 506 to state 502 by traversing along 520. The arbitrator then de-asserts the P2_GRT signal 612 at 652.

When either stack 120, 130 receives a de-assertion of the "grant" signal from the arbitrator, the stack stops the current operation and resets the MAC or Link Layer state machine so that it is ready to process any subsequent request. The stack may also pass an indication to the higher stack layers that the operation failed. The higher layers deal with this as they would for any other failure indication. The stack also de-asserts the "Request" signal to inform the arbitrator that the radio interface is now available for use.

In the described example implementation, the wireless communications system 130, can be made from a circuit consisting of an IEEE 802.15.4 baseband PHY 124, a Bluetooth Smart baseband PHY 134, a radio 142 capable of operating in either IEEE802.15.4 or Bluetooth Smart configurations, an antenna 144, a microcontroller, and software that implements the ZigBee 122 stack and Bluetooth Smart stack 132, an application 118, and the arbitrator or arbitration engine 150.

As discussed above the ZigBee stack 122 and Bluetooth Smart stack 132 are modified to produce current priority levels for messages, which are passed to the arbitration engine 150. The arbitration engine 150 uses this information, together with any other pertinent information, to determine which protocol to select. The arbitration engine can then pass a signal indicating the current selection to a mux 140 that controls access to the radio 142. The arbitration engine 150 may also pass a signal back to the stacks to inform them of the selection, so that the de-selected stack can recover gracefully if appropriate.

As discussed above, the principle of the dynamic message priority assignment and arbitration may be applied to a wide variety of difference wireless communication systems including: systems consisting of three or more protocols sharing the same hardware resources; systems consisting of two or more protocols operating in the same frequency band, either sharing the same hardware or using separate hardware; systems consisting of two or more implementations of the same protocol operating in the same frequency band, either sharing the same hardware or using separate hardware; systems consisting of two or more implementations of the same protocol sharing the same resources, either hardware or software; systems consisting of two or more protocols sharing the same antenna; and any combination of the preceding.

Figure 1 shows a system consisting of two protocols sharing a common wireless hardware resource, and in which the arbitration engine 150 is implemented in hardware, but in other variations the arbitration engine 150 may be implemented in software or a combination of hardware and software.

The principles of the system illustrated in Figure 1 and described herein may be applied to any system where multiple wireless communications protocols may operate using at least one common part of the radio interface or where they are too closely co-located to avoid interference if both protocols were to operate simultaneously. The wireless communications system may be used in a wide variety of electronic devices, including, by way of example only, building automation devices, a wireless-enabled light, a thermostat, an occupancy detector, a window or door switch, an electronic door lock, a security alarm, a remote control, a smart meter, and a network gateway or bridge.

In some embodiments, some or all of the wireless communications system, other than the antenna, may be implemented as a semi-conductor integrated circuit or circuits, or as part of a semi-conductor integrated circuit or circuits. Each semi-conductor integrated circuit may be provided as a die in a package which also includes a lead frame. Hence, the plurality of stacks, arbitrator and radio of the system may be provided as one package or a plurality of packages.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Any instructions and/or flowchart steps can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

While the disclosure is amenable to various modifications and alternative forms, specifics thereof have been shown by way of example in the drawings and described in detail. It should be understood, however, that other embodiments, beyond the particular embodiments described, are possible as well. All modifications, equivalents, and alternative embodiments falling within the scope of the appended claims are covered as well.

## Claims

1. A wireless communications system (110, 160, 170, 180, 190, 200, 220) comprising:
a first stack (120) of a first wireless communications protocol;
a second stack (130) of a second wireless communications protocol;
a wireless interface arranged to transmit and receive wireless signals, and wherein the wireless interface is useable by the first stack and the second stack; and
an arbitrator (150, 162, 176, 181, 206) in communication with the first stack and the second stack, wherein the first stack is configured to determine a first priority (326) associated with a current message to be transmitted or received by the first stack using the wireless interface, the second stack is configured to determine a second priority (386) associated with a current message to be transmitted or received by the second stack using the wireless interface, and wherein the arbitrator is configured to control which one of the first stack and the second stack can use the wireless interface to transmit or receive the current message, wherein the first stack (120) is configured to dynamically determine the first priority based on a current status of the first stack and a type of the current message to be transmitted or received by the first stack, the second stack (130) is configured to dynamically determine the second priority based on a current status of the second stack and a type of the current message to be transmitted or received by the second stack and the arbitrator is configured to control which one of the first stack and the second stack can use the wireless interface to transmit or receive the current message based on which of the first priority and the second priority is higher.

2. The wireless communications system (110, 160, 170, 180, 190, 200, 220) as claimed in any preceding claim, wherein the arbitrator (150, 162, 176, 181, 206) is configured to interrupt a current use of the wireless interface by a one of the first stack and the second stack and to allow use of the wireless interface by the other of the first stack and the second stack.

3. The wireless communications system (110, 160, 170, 180, 190, 200, 220) as claimed in any of claims 1 to 2, wherein the arbitrator (150, 162, 176, 181, 206) is configured to allow a current use of the wireless interface by a one of the first stack and the second stack to complete before allowing use of the wireless interface by the other of the first stack and the second stack.

4. The wireless communications system (110, 160, 170, 180, 190, 200, 220) as claimed in claim 3, wherein the arbitrator (150, 162, 176, 181, 206) is configured to implement a handshaking protocol between the first stack and the arbitrator and the second stack and the arbitrator.

5. The wireless communications system (110, 160, 170, 180, 190, 200, 220) as claimed in claim 4, wherein:
the first stack (120) is configured to send (316) a wireless access request (324) and the first priority (326) to the arbitrator to request wireless use;
the second stack (130) is configured to send (376) a wireless access request (384) and the second priority (386) to the arbitrator to request wireless use; and
the arbitrator (150, 162, 176, 181, 206) is configured to determine which of the first stack and the second stack to allow to use the wireless interface based on the order of receipt of the wireless access requests, the first priority and the second priority and to send a wireless access grant (328, 388) to a one of the first stack and the second stack which most recently sent a wireless access request and having the higher priority.

6. The wireless communications system (110, 160, 170, 180, 190, 200, 220) as claimed in any preceding claim, wherein the arbitrator (150, 162, 176, 181, 206) is further configured to enable or disable use of at least one part of the wireless interface.

7. The wireless communications system (110, 160, 170, 190, 200, 220) as claimed in any preceding claim, and further comprising a signal routing device (140, 178, 208, 226) arranged to route first signals of the first stack and second signals of the second stack, and wherein the wireless interface includes at least one common part (142, 144) which is commonly useable by the first stack and the second stack and wherein the signal routing device is connected to the at least one common part to route either the first signals to or from the common part or the second signals to or form the common part.

8. The wireless communications system (110, 160, 170, 190, 200, 220) as claimed in claim 7, wherein the arbitrator (150, 162, 176, 181, 206) is in communication with the signal routing device(140, 178, 208, 226) and the arbitrator is configured to control the signal routing device to selectively route either the first signals or the second signals.

9. The wireless communications system (110, 160, 170, 190, 200, 220) as claimed in claim 7 or 8, wherein the at least one common part comprises an antenna (144) or a radio (142) and an antenna (144).

10. The wireless communications system (200, 220) as claimed in any preceding claim, wherein a part of the first stack (120) and a part of the second stack (130) is a part common to the first stack and the second stack (210, 212).

11. A package or a plurality of packages, wherein the or each package comprises a lead frame and a semi-conductor integrated circuit, wherein the semi-conductor integrated circuit or the semiconductor integrated circuits are configured to provide the wireless communications system (110, 160, 170, 180, 190, 200, 220) of any of claims 1 to 10.

12. An electronic device (100, 101, 102, 103, 104, 105, 106) including the wireless communications system (110, 160, 170, 180, 190, 200, 220) of any of claims 1 to 10 or the package or plurality of packages of claim 11.

13. A method (300) for controlling use of a wireless interface of a wireless communications system including a first stack (120) of a first wireless communications protocol and a second stack (130) of a second wireless communications protocol, comprising:
the first stack (310) dynamically determining a first priority (326) associated with a current message (314) to be sent or received by the first stack using the wireless interface based on a current status of the first stack (312) and a type of the current message to be transmitted or received by the first stack;
the second stack (370) dynamically determining a second priority (386) associated with a current message (374) to be sent or received by the second stack using the wireless interface based on a current status of the second stack (372) and a type of the current message to be transmitted or received by the second stack; and
allowing use of the radio interface (350) by one of the first stack and the second stack based on which of the first priority and the second priority is higher (346).

## Patentansprüche

1. Ein drahtloses Kommunikationen System (110, 160, 170, 180, 190, 200, 220) aufweisend:
einen ersten Stack (120) von einem ersten drahtlosen Kommunikationen Protokoll;
einen zweiten Stack (130) von einem zweiten drahtlosen Kommunikationen Protokoll;
ein drahtloses Interface, welches eingerichtet ist zum Übertragen und Empfangen von drahtlosen Signalen, und
wobei das drahtlose Interface verwendbar ist von dem ersten Stack und dem zweiten Stack; und
einen Vermittler (150, 162, 176, 181, 206) in Kommunikation mit dem ersten Stack und dem zweiten Stack,
wobei der erste Stack konfiguriert ist zum Bestimmen einer ersten Priorität (326), welche assoziiert ist mit einer aktuellen Mitteilung, welche übertragen oder empfangen werden soll mittels des ersten Stacks unter Verwenden des drahtlosen Interfaces,
wobei der zweite Stack konfiguriert ist zum Bestimmen einer zweiten Priorität (386), welche assoziiert ist mit einer aktuellen Mitteilung, welche übertragen oder empfangen werden soll mittels des zweiten Stacks unter Verwenden des drahtlosen Interfaces, und
wobei der Vermittler konfiguriert ist zum Steuern, welcher von dem ersten Stack und dem zweiten Stack verwenden kann das drahtlose Interface zum Übertragen oder Empfangen der aktuellen Mitteilung,
wobei der erste Stack (120) konfiguriert ist zum dynamischen Bestimmen der ersten Priorität basierend auf einem aktuellen Status von dem ersten Stack und einem Typ von der aktuellen Mitteilung, welche übertragen oder empfangen werden soll mittels des ersten Stacks,
wobei der zweite Stack (130) konfiguriert ist zum dynamischen Bestimmen der zweiten Priorität basierend auf einem aktuellen Status von dem zweiten Stack und einem Typ von der aktuellen Mitteilung, welche übertragen oder empfangen werden soll mittels des zweiten Stack und
wobei der Vermittler konfiguriert ist zum Steuern, welcher von dem ersten Stack und dem zweiten Stack verwenden kann das drahtlose Interface zum Übertragen oder Empfangen der aktuellen Mitteilung basierend auf welche von der ersten Priorität und der zweiten Priorität höher ist.

2. Das drahtlose Kommunikationen System (110, 160, 170, 180, 190, 200, 220) gemäß irgendeinem vorherigen Anspruch,
wobei der Vermittler (150, 162, 176, 181, 206) konfiguriert ist zum Unterbrechen einer aktuellen Verwendung von dem drahtlosen Interface durch einen einzigen von dem ersten Stack und dem zweiten Stack und zum Zulassen von Verwendung von dem drahtlosen Interface durch den anderen von dem ersten Stack und dem zweiten Stack.

3. Das drahtlose Kommunikationen System (110, 160, 170, 180, 190, 200, 220) gemäß irgendeinem der Anspruch 1 bis 2,
wobei der Vermittler (150, 162. 176, 181, 206) konfiguriert ist zum Zulassen einer aktuellen Verwendung von dem drahtlosen Interface durch einen einzigen von dem ersten Stack und dem zweiten Stack zum Fertigstellen, vor einem Zulassen von einer Verwendung von dem drahtlosen Interface durch den anderen von dem ersten Stack und dem zweiten Stack.

4. Das drahtlose Kommunikationen System (110, 160, 170, 180, 190, 200, 220) gemäß Anspruch 3,
wobei der Vermittler (150, 162, 176, 181, 206) konfiguriert ist zum Implementieren eines Handshake-Protokolls zwischen dem ersten Stack und dem Vermittler und dem zweiten Stack und dem Vermittler.

5. Das drahtlose Kommunikationen System (110, 160, 170, 180, 190, 200, 220) gemäß Anspruch 4, wobei
der erste Stack (120) konfiguriert ist zum Senden (316) einer drahtlosen Zugangsanfrage (324) und der ersten Priorität (326) zu dem Vermittler zum Anfragen von drahtloser Verwendung;
der zweite Stack (130) konfiguriert ist zum Senden (376) einer drahtlosen Zugangsanfrage (384) und der zweiten Priorität (386) zu dem Vermittler zum Anfragen von drahtloser Verwendung; und
der Vermittler (150, 162, 176, 181, 206) konfiguriert ist zum Bestimmen, welcher von dem ersten Stack und dem zweiten Stack zulässt eine Verwendung des drahtlosen Interfaces basierend auf der Reihenfolge von Empfang von den drahtlosen Zugangsanfragen, der ersten Priorität und der zweiten Priorität, und zum Senden einer drahtlosen Zugangsbewilligung (328, 388) zu einem einzigen von dem ersten Stack und dem zweiten Stack, welcher zuletzt sendet eine drahtlose Zugangsanfrage und die höhere Priorität hat.

6. Das drahtlose Kommunikationen System (110, 160, 170, 180, 190, 200, 220) gemäß irgendeinem vorherigen Anspruch,
wobei der Vermittler (150, 162, 176, 181, 206) ferner konfiguriert ist zum Ermöglichen oder Unterbinden von Verwendung von zumindest einem Teil von dem drahtlosen Interface.

7. Das drahtlose Kommunikationen System (110, 160, 170, 180, 190, 200, 220) gemäß irgendeinem vorherigen Anspruch, und ferner aufweisend eine Signal Routing Vorrichtung (140, 178, 208, 226), welche eingerichtet ist zum Routen von ersten Signalen von dem ersten Stack und zweiten Signalen von dem zweiten Stack, und
wobei das drahtlose Interface umfasst zumindest einen gemeinsamen Teil (142, 144), welcher gemeinsam verwendbar ist durch den ersten Stack und den zweiten Stack und
wobei die Signal Routing Vorrichtung verbunden ist zu dem zumindest einen gemeinsamen Teil zum Routen von entweder den ersten Signalen zu oder von dem gemeinsamen Teil oder den zweiten Signalen zu oder von dem gemeinsamen Teil.

8. Das drahtlose Kommunikationen System (110, 160, 170, 190, 200, 220) gemäß Anspruch 7,
wobei der Vermittler (150, 162, 176, 181, 206) in Kommunikation ist mit der Signal Routing Vorrichtung (140, 178, 208, 226) und der Vermittler konfiguriert ist zum Steuern der Signal Routing Vorrichtung zum selektiven Routen entweder der ersten Signale oder der zweiten Signale.

9. Das drahtlose Kommunikationen System (110, 160, 170, 190, 200, 220) gemäß Anspruch 7 oder 8,
wobei der zumindest eine gemeinsame Teil aufweist eine Antenne (144) oder ein Funkgerät (142) und eine Antenne (144).

10. Das drahtlose Kommunikationen System (200, 220) gemäß irgendeinem vorherigen Anspruch,
wobei ein Teil von dem ersten Stack (120) und ein Teil von dem zweiten Stack (130) ein Teil ist, der gemeinsam ist, von dem ersten Stack und dem zweiten Stack (210, 212).

11. Ein Packung oder eine Mehrzahl von Packungen,
wobei die oder jede Packung aufweist einen Leadframe und einen Halbleiter integrierten Schaltkreis,
wobei der Halbleiter integrierte Schaltkreis oder die Halbleiter integrierten Schaltkreise konfiguriert sind zum Bereitstellen des drahtlosen Kommunikationen Systems (110, 160, 170, 180, 190, 200, 220) von irgendeinem der Ansprüche 1 bis 10.

12. Eine elektronische Vorrichtung (100, 101, 102, 103, 104, 105, 106) umfassend das drahtlose Kommunikationen System (110, 160, 170, 180, 190, 200, 220) von irgendeinem der Ansprüche 1 bis 10 oder die Packung oder die Mehrzahl von Packungen von Anspruch 11.

13. Ein Verfahren (300) zum Steuern von Verwendung von einem drahtlosen Interface von einem drahtlosen Kommunikationen System umfassend einen ersten Stack (120) von einem ersten drahtlosen Kommunikationen Protokoll und einem zweiten Stack (130) von einem zweiten drahtlosen Kommunikationen Protokoll, aufweisend:
dynamisches Bestimmen, von dem ersten Stack (310), einer ersten Priorität (326), die assoziiert ist mit einer aktuellen Mitteilung (314), welche gesendet oder empfangen werden soll mittels des ersten Stacks unter Verwenden des drahtlosen Interfaces basierend auf einem aktuellen Status von dem ersten Stack (312) und einem Typ von der aktuellen Mitteilung, welche übertragen oder empfangen werden soll mittels des ersten Stacks;
dynamisches Bestimmen, von dem zweiten Stack (370), einer zweiten Priorität (386), die assoziiert ist mit einer aktuellen Mitteilung (374), welche gesendet oder empfangen werden soll mittels des zweiten Stacks unter Verwenden des drahtlosen Interfaces basierend auf einem aktuellen Status von dem zweiten Stack (372) und einem Typ von der aktuellen Mitteilung, welche übertragen oder empfangen werden soll mittels des zweiten Stacks; und
Zulassen von einer Verwendung von einem Funkinterface (350) von einem einzigen von dem ersten Stack und dem zweiten Stack basierend auf welche von der ersten Priorität und der zweiten Priorität höher ist (346).

## Revendications

1. Système de communication sans fil (110, 160, 170, 180, 190, 200, 220) comprenant :
une première pile (120) d'un premier protocole de communications sans fil ;
une deuxième pile (130) d'un deuxième protocole de communications sans fil ;
une interface sans fil agencée pour émettre et recevoir des signaux sans fil, et dans lequel l'interface sans fil est utilisable par la première pile et la deuxième pile ; et
un arbitre (150, 162, 176, 181, 206) en communication avec la première pile et la deuxième pile, dans lequel la première pile est configurée pour déterminer une première priorité (326) associée à un message actuel à émettre ou à recevoir par la première pile en utilisant l'interface sans fil, la deuxième pile est configurée pour déterminer une deuxième priorité (386) associée à un message actuel à émettre ou à recevoir par la deuxième pile en utilisant l'interface sans fil, et dans lequel l'arbitre est configuré pour commander laquelle de la première pile et de la deuxième pile peut utiliser l'interface sans fil pour émettre ou recevoir le message actuel,
dans lequel la première pile (120) est configurée pour déterminer de manière dynamique la première priorité sur la base d'un état actuel de la première pile et d'un type du message actuel à émettre ou à recevoir par la première pile, la deuxième pile (130) est configurée pour déterminer de manière dynamique la deuxième priorité sur la base d'un état actuel de la deuxième pile et d'un type du message actuel à émettre ou à recevoir par la deuxième pile, et l'arbitre est configuré pour commander laquelle de la première pile et de la deuxième pile peut utiliser l'interface sans fil pour émettre ou recevoir le message actuel sur la base de laquelle de la première priorité et de la deuxième priorité est supérieure.

2. Système de communications sans fil (110, 160, 170, 180, 190, 200, 220) selon l'une quelconque des revendications précédentes, dans lequel l'arbitre (150, 162, 176, 181, 206) est configuré pour interrompre une utilisation actuelle de l'interface sans fil par l'une de la première pile et de la deuxième pile et pour permettre l'utilisation de l'interface sans fil par l'autre de la première pile et de la deuxième pile.

3. Système de communications sans fil (110, 160, 170, 180, 190, 200, 220) selon l'une quelconque des revendications 1 et 2, dans lequel l'arbitre (150, 162, 176, 181, 206) est configuré pour permettre l'achèvement d'une utilisation actuelle de l'interface sans fil par l'une de la première pile et de la deuxième pile avant de permettre l'utilisation de l'interface sans fil par l'autre de la première pile et de la deuxième pile.

4. Système de communications sans fil (110, 160, 170, 180, 190, 200, 220) selon la revendication 3, dans lequel l'arbitre (150, 162, 176, 181, 206) est configuré pour mettre en oeuvre un protocole de transfert entre la première pile et l'arbitre et la deuxième pile et l'arbitre.

5. Système de communications sans fil (110, 160, 170, 180, 190, 200, 220) selon la revendication 4, dans lequel :
la première pile (120) est configurée pour envoyer (316) une demande d'accès sans fil (324) et la première priorité (326) à l'arbitre pour demander une utilisation sans fil ;
la deuxième pile (130) est configurée pour envoyer (376) une demande d'accès sans fil (384) et la deuxième priorité (386) à l'arbitre pour demander une utilisation sans fil ; et
l'arbitre (150, 162, 176, 181, 206) est configuré pour déterminer à laquelle de la première pile et de la deuxième pile il convient de permettre d'utiliser l'interface sans fil sur la base de l'ordre de réception des demandes d'accès sans fil, de la première priorité et de la deuxième priorité et pour envoyer une autorisation d'accès sans fil (328, 388) à celle de la première pile et de la deuxième pile qui a le plus récemment envoyé une demande d'accès sans fil et présente la priorité supérieure.

6. Système de communications sans fil (110, 160, 170, 180, 190, 200, 220) selon l'une quelconque des revendications précédentes, dans lequel l'arbitre (150, 162, 176, 181, 206) est en outre configuré pour activer ou désactiver l'utilisation au moins d'une partie de l'interface sans fil.

7. Système de communications sans fil (110, 160, 170, 190, 200, 220) selon l'une quelconque des revendications précédentes, et comprenant en outre un dispositif d'acheminement de signal (140, 178, 208, 226) agencé pour acheminer des premiers signaux de la première pile et des deuxièmes signaux de la deuxième pile, et dans lequel l'interface sans fil comprend au moins une partie commune (142, 144) qui peut être utilisée en commun par la première pile et la deuxième pile, et dans lequel le dispositif d'acheminement de signal est connecté à ladite au moins une partie commune pour acheminer soit les premiers signaux à destination ou en provenance de la partie commune, soit les deuxièmes signaux à destination ou en provenance de la partie commune.

8. Système de communications sans fil (110, 160, 170, 190, 200, 220) selon la revendication 7, dans lequel l'arbitre (150, 162, 176, 181, 206) est en communication avec le dispositif d'acheminement de signal (140, 178, 208, 226) et l'arbitre est configuré pour commander le dispositif d'acheminement de signal pour acheminer sélectivement soit les premiers signaux soit les deuxièmes signaux.

9. Système de communications sans fil (110, 160, 170, 190, 200, 220) selon la revendication 7 ou 8, dans lequel ladite au moins une partie commune comprend une antenne (144) ou un dispositif radio (142) et une antenne (144).

10. Système de communications sans fil (200, 220) selon l'une quelconque des revendications précédentes, dans lequel une part de la première pile (120) et une partie de la deuxième pile (130) est une partie commune à la première pile et à la deuxième pile (210, 212).

11. Paquet ou pluralité de paquets, ledit ou chaque paquet comprenant une grille de connexion et un circuit intégré à semi-conducteur, dans lequel le(s) circuit(s) intégré(s) à semi-conducteur est/sont configuré(s) pour fournir le système de communications sans fil (110, 160, 170, 180, 190, 200, 220) selon l'une quelconque des revendications 1 à 10.

12. Dispositif électronique (100, 101, 102, 103, 104, 105, 106) comprenant le système de communications sans fil (110, 160, 170, 180, 190, 200, 220) selon l'une quelconque des revendications 1 à 10 ou le paquet ou la pluralité de paquets selon la revendication 11.

13. Procédé (300) pour commander l'utilisation d'une interface sans fil d'un système de communication sans fil comprenant une première pile (120) d'un premier protocole de communications sans fil et une deuxième pile (130) d'un deuxième protocole de communications sans fil, comprenant :
la détermination dynamique, par la première pile (310), d'une première priorité (326) associée à un message actuel (314) à envoyer ou à recevoir par la première pile en utilisant l'interface sans fil sur la base d'un état actuel de la première pile (312) et d'un type du message actuel à émettre ou à recevoir par la première pile ;
la détermination dynamique, par la deuxième pile (370), d'une deuxième priorité (386) associée à un message actuel (374) à envoyer ou à recevoir par la deuxième pile en utilisant l'interface sans fil sur la base d'un état actuel de la deuxième pile (372) et d'un type du message actuel à émettre ou à recevoir par la deuxième pile ; et
la permission de l'utilisation de l'interface radio (350) par l'une de la première pile et de la deuxième pile sur la base de laquelle de la première priorité et de la deuxième priorité est supérieure (346) .
